(19) Europäisches Patentamt

European Patent Office

Office européen des brevets

(11) **EP 4 530 958 A1**

(12) **EUROPEAN PATENT APPLICATION**
published in accordance with Art. 153(4) EPC

(43) Date of publication:
**02.04.2025 Bulletin 2025/14**

(21) Application number: **23846879.7**

(22) Date of filing: **13.07.2023**

(51) International Patent Classification (IPC):
***G06Q 30/02*** (2023.01)      ***G06Q 30/06*** (2023.01)
***G06Q 10/06*** (2023.01)

(52) Cooperative Patent Classification (CPC):
**G06Q 10/06; G06Q 30/02; G06Q 30/06**

(86) International application number:
**PCT/KR2023/010045**

(87) International publication number:
**WO 2024/025220 (01.02.2024 Gazette 2024/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.07.2022 KR 20220093437**

(71) Applicants:
• **Aligo Ai Inc.
Seoul 02792 (KR)**
• **Korea University Research and Business
Foundation
Seoul 02841 (KR)**

(72) Inventors:
• **LEE, Janghyuk
Seoul 02225 (KR)**
• **KIM, Raehyun
Seoul 04182 (KR)**
• **JANG, Seungwon
Seoul 02553 (KR)**

(74) Representative: **Dantz, Jan Henning et al
Loesenbeck - Specht - Dantz
Patent- und Rechtsanwälte
Am Zwinger 2
33602 Bielefeld (DE)**

(54) **SYSTEM FOR PROVIDING ONLINE ADVERTISEMENT CONTENT PLATFORM**

(57)    According to various embodiments, the online advertisement content platform providing system includes a server and an electronic device, wherein the server is configured to obtain at least one content of a specific product from the electronic device, wherein the at least one content includes an image of the specific product, acquire product attribute information of the specific product based on the at least one content, wherein the product attribute information corresponds to a plurality of product features, and provide, based on the product attribute information, recommendation information of a famous image identified based on a plurality of weight values related to the plurality of product features to the electronic device, wherein the recommendation information of the famous image includes at least one famous image, wherein the electronic device is configured to display a first screen including the at least one famous image and a predetermined number of famous features among the plurality of famous features based on the provided recommendation information of the famous image, wherein based on the specific product being the first product, the predetermined number of famous features includes a first group of famous features among the plurality of famous features, and based on the specific product being the second product, the predetermined number of famous features includes a second group of famous features among the plurality of famous features, and the second group of famous features may be at least partially different from the first group of famous features.

EP 4 530 958 A1

**(Cont. next page)**

# FIG. 6

Start

Acquire at least one content of a specific product (601)

Acquire product attribute information (603)

Provide celebrity image recommendation information identified based on weight values associated product attribute information (605)

Display a screen including celebrity images and a predetermined number of celebrity features (607)

End

**Description**

[Technical Field]

The present disclosure relates to a system for providing an online advertisement content platform, an electronic device included in the system, and an operation method of the electronic device.

[Background Art]

The online display advertisement market is growing continuously. In online advertisements, there are general ways in which the celebrity appears to focus on the interests of consumers. Accordingly, the celebrity's advertisement invitation market is growing.

In this situation, the advertiser has an issue related to the cost of using the celebrity to advertisements, and the celebrity has an issue that should rapidly enter the advertisement market while the celebrity's celebrity continues.

[Disclosure]

[Technical Problem]

In order to quickly execute online advertisements, it is necessary to mediatrate a platform between an advertiser who sells a product, a creator who produces an advertisement, and a celebrity who appears in an advertisement. When an online advertisement content platform intends to conduct an online advertisement of a specific product, an advertisement effect can be increased only when a celebrity suitable for the attribute of the product intended to conduct the advertisement appears in the advertisement.

According to various embodiments, by providing a system for providing an online advertisement content platform, an electronic device included in the system, and an operation method of the electronic device, a celebrity suitable according to a specific product can be recommended.

[Technical Solution]

An online advertisement content platform providing system includes a server and an electronic device, wherein the server is configured to obtain at least one content of a specific product from the electronic device, wherein the at least one content includes an image of the specific product, obtain a product attribute information of the specific product based on the at least one content, wherein the product attribute information corresponds to a plurality of product features, provide celebrity image recommendation information identified based on a plurality of weight values associated with the plurality of product features to the electronic device, wherein the celebrity image recommendation information includes the at least one celebrity image, wherein the electronic device is configured to display a first screen including the at least one celebrity image and a predetermined number of celebrity features among a plurality of celebrity features based on the provided celebrity image recommendation information, wherein the predetermined number of celebrity features includes a first group of celebrity features among the plurality of celebrity features based on the specific product being a first product, wherein the predetermined number of celebrity features includes a second group of celebrity features among the plurality of celebrity features based on the specific product being a second product, wherein the second group of celebrity features is least partially different from the first group of celebrity features.

According to various embodiments, an operating method of an online advertisement content platform providing system includes: obtaining, by the server, at least one content of a specific product from an electronic device, wherein the at least one content includes an image of the specific product; obtaining, by the server, product attribute information of the specific product based on the at least one content, wherein the product attribute information corresponds to a plurality of product features; providing, by the server, celebrity image recommendation information identified based on a plurality of weight values related to the plurality of product features to the electronic device based on the product attribute information, wherein the celebrity image recommendation information includes at least one celebrity image; and displaying, by the electronic device, a first screen including at least one celebrity image and a predetermined number of celebrity features among the plurality of celebrity features based on the provided celebrity image recommendation information, wherein based on the specific product being the first product, the predetermined number of celebrity features include a first group of celebrity features among the plurality of celebrity features, and based on the specific product being the second product, the designated number of celebrity features include a second group of celebrity features among the plurality of celebrity features, and the second group of celebrity features may be at least partially different from the first group of celebrity features.

According to various embodiments, an electronic device includes a display, a memory, and at least one processor, wherein the at least one processor may obtain at least one content of a specific product, wherein the at least one content includes an image of the specific product, obtain product attribute information of the specific product based on the at least one content, wherein the product attribute information is based on a plurality of product features, obtain a plurality of celebrity features for each of the plurality of celebrity images based on the plurality of celebrity images, wherein the plurality of celebrity features for each of the plurality of celebrity images include first features for a first image of the specific celebrity and second features for a second image of the specific celebrity, wherein the first features and the second features are at least partially different, obtain designated celebrity features from among the features of the plurality of celebrity images and the number of features corresponding to the at least one celebrity image based on the product attribute information, obtain celebrity image recommendation information including the at least one celebrity image and the designated celebrity features, and display a first screen including the at least one celebrity image and the designated celebrity features through the display based on the

According to various embodiments, an operation method of an electronic device may include: obtain at least one content of a specific product; obtain product attribute information of the specific product based on the at least one content, wherein the at least one content includes an image of the specific product; obtain a plurality of celebrity features for each of the plurality of

[Advantageous Effects]

According to various embodiments, the operating method of the online advertisement content platform providing system and the operating method of the online advertisement content platform providing system may provide an advertiser that sells a product, a creator that produces an advertisement, and a platform that mediates between famous people appearing in an advertisement.

Accordingly, the famous people may provide an effect of increasing advertisement income at a fixed cost and an effect of expanding a region that can be exposed to an advertisement and receiving advertisements of various goods at the same time. Based on a quick settlement through simple execution, the risk of an advertisement contract can be minimized, and the famous people may have the final decision right when requesting the use of the portrait right, thereby preventing the case of being exposed to and abused by the advertisement in advance.

The advertiser may execute the advertisement quickly by accessing a library where photos and videos of the famous people are constructed, and the advertisement effect can be maximized by executing the advertisement during a period in which the famous people's famous tax continues. According to a system that automatically recommends a suitable famous people for a product to be advertised, the advantage of using the optimal famous people for the advertisement at the optimal cost can be provided.

[Description of Drawings]

FIG 1 is a block diagram of devices included in a system according to various embodiments.
FIG 2 is a block diagram of an electronic device according to various embodiments.

FIG 3 is a diagram for describing an example of an artificial intelligence model according to various embodiments.
FIG 4 is a diagram for describing learning data according to various embodiments.
FIG 5 is a diagram for describing a learned artificial intelligence model according to various embodiments.
FIG 6 is a flowchart for describing an operation method of an online advertisement content platform providing system according to various embodiments.
FIG 7 is a flowchart for describing an operation method of an online advertisement content platform providing system according to various embodiments.
FIG 8 is a diagram for describing examples of a graphic object included in a screen recommending a celebrity according to various embodiments.
FIG 9 illustrates an example of a screen for receiving information of a specific product according to various embodiments.
FIG 10 illustrates an example of a screen for receiving product category information according to various embodiments.
FIG 11 illustrates an example of a screen for recommending a celebrity according to various embodiments.
FIG 12a illustrates an example of a profile of a specific celebrity according to various embodiments.
FIG 12b illustrates an example of a profile of a specific celebrity according to various embodiments.
FIG 13 illustrates an example of an interface screen for mediating negotiation between an advertiser and a celebrity according to various embodiments.
FIG 14 illustrates an example of a screen for recommending a creator according to various embodiments.
FIG 15 illustrates an example of a profile of a specific creator according to various embodiments.
FIG 16 illustrates an example of an interface screen for mediating negotiation between an advertiser and a creator according to various embodiments.
FIG 17 illustrates an example of a result screen of an advertisement mediation platform according to various embodiments.
FIG 18 illustrates an example of an advertisement enforcement result according to various embodiments.

[Best Mode]

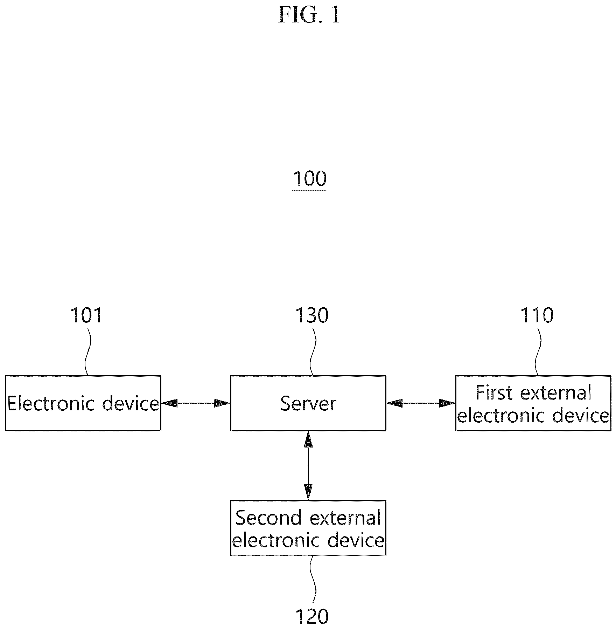

FIG 1 is a block diagram of devices included in the system 100 according to various embodiments.
According to various embodiments, the system 100 may be a system for providing an online advertisement content platform. For example, the system 100 may provide a platform for intermediating between an advertiser that sells a product, a creator that produces an advertisement, and a celebrity that appears in an advertisement. However, it can be understood by those skilled in the art that there is no limitation in the field of services that the system 100 can provide.

Referring to FIG 1, the system 100 may include an electronic device 101, a first external electronic device 110, a second external electronic device 120, and/or a server 130. For example, the electronic device 101 may be an electronic device of an advertiser. For example, the first external electronic device 110 may be an electronic device of a celebrity. For example, the second external electronic device 120 may be an electronic device of a creator. For example, the server 130 may be a server that mediates the electronic device 101, the first external electronic device 110, and the second external electronic device 120. Although it is illustrated in FIG 1 that each device is one, this is merely an example, and there is no limitation in the number of each of the electronic devices 101, the first external electronic device 110, and the second external electronic device 120 that are mediated through the server 130. For example, the electronic device 101 may exist as many as the number of advertisers, the first external electronic device 110 may exist as many as the number of celebrities, and the second external electronic device 120 may exist as many as the number of creators.

According to various embodiments, the components illustrated in FIG 1 (e.g., the electronic device 101, the first and second electronic devices 110 and 120, and/or the server 130) may be connected by wired communication and/or wireless communication, and may exchange various information and/or data described in this disclosure with each other through the communication.

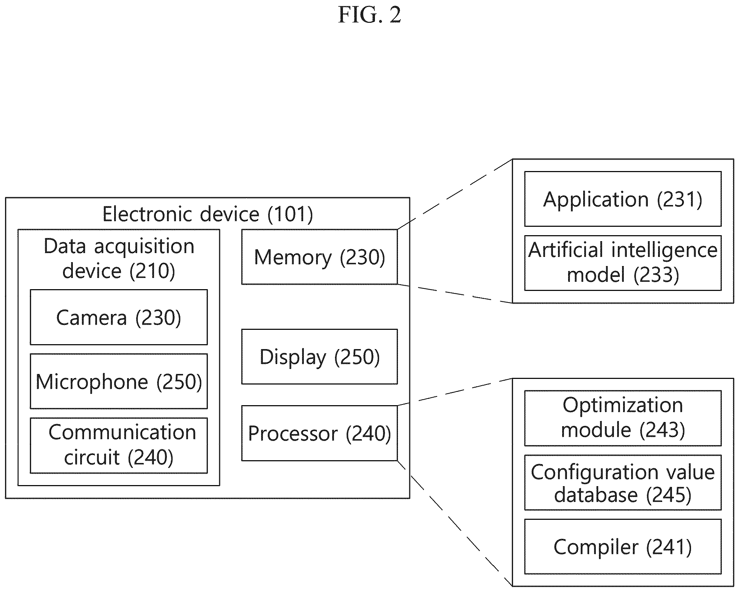

FIG 2 is a block diagram of an electronic device 101 according to various embodiments.

According to various embodiments, other components included in the system 100 (e.g., the first electronic device 110, the second electronic device 120, and/or the server 130) may be implemented to perform at least a part of the operations of the electronic device 101 described in this disclosure, including the same components as the components illustrated in FIG 2.

Referring to FIG 2, the electronic device 101 may include a data acquisition device 210 such as a camera 211, a microphone 213, and a communication circuit 215, a processor 240 including a optimization module 243, a configuration value database (DB) 245 and a compiler 241 and a display 250 including a memory 230 that stores a plurality of applications 231 and a plurality of artificial intelligence model 233, an optimization module 243, a configuration value database (DB) 245 and a compiler 241. There is no limitation in the type of the display 250. Hereinafter, each of the components included in the electronic device 101 will be described.

First, the data acquisition device 210 will be described in various embodiments. description will below. now below will below.

According to various embodiments, the data acquisition device 210 may be interpreted as a logical concept for classifying devices for acquiring content among devices included in the electronic device 101. In addition to the camera 211, the microphone 213, and the communication circuit 215, the data acquisition device 210 may further include various types of content.

According to various embodiments, the data acquisition devices 210 may acquire various types of data (or content) to be processed based on the artificial intelligence model 233 to be described later. In an embodiment, the data acquisition devices 210 may acquire various types of data by being driven according to the execution and/or driving of processes, programs, and/or applications installed (or stored) in the electronic device 101. For example, when a camera application is executed and/or driven, the electronic device 101 may drive the camera 211 (e.g., perform an operation of controlling the readout of the image sensor) to acquire an image and/or an image as data. For example, when a recording application is executed and/or driven, the electronic device 101 may drive the microphone 213 to acquire audio data such as a user's utterance and/or ambient sounds as data. For example, when a web-based application is executed and/or driven, the electronic device 101 may establish a communication connection with a media server using the communication circuit 215 and acquire media data such as image, image, and audio data. Hereinafter, examples of each of the data acquisition devices 210 will be described.

According to various embodiments, the camera 211 (e.g., at least one front camera and at least one rear camera) may capture still images (or images) and moving images. According to an embodiment, the at least one camera 211 may include one or more lenses, image sensors, image signal processors, or flashes. In an embodiment, the electronic device 101 may include cameras 211 having different attributes or functions (or uses). For example, the at least one camera 211 may include cameras of different angles of view. The angle of view may include, for example, a super wide angle of 114° to 94°, a wide angle of 84° to 63°, a telephoto of 28° to 8°, and a super telephoto of 6° to 3°. For example, as described above, the at least one camera 211 may include at least one front camera disposed on a front surface to capture an image and/or an image and at least one rear camera disposed on a rear surface to capture an image and/or an image.

According to various embodiments, the microphone 213 may receive sound from the outside of the electronic device 101. For example, the electronic device 101 (e.g., the processor 240) may drive the microphone 213 to receive sound generated from the outside through the microphone 213. The sound generated from the outside may include voices (or utterances) of speakers (e.g., a user and/or another speaker (or other peer)), life noise, and ambient (or background) noises. In an embodiment, the microphone 213 may include a plurality of microphones. The electronic device 101 (e.g., the processor 240) may form beamforming for receiving sound generated in a specified direction from the electronic device 101 from sound received using the plurality of microphones 213. A sound in the specified direction acquired based on the received sound may be defined as a sub sound. Each of the plurality of microphones 213 may be disposed in the electronic device 101 so as to be spaced apart by a predetermined distance and by a time or a phase related to obtain the sound. Since the beamforming technology is a well-known technology, detailed descriptions will be omitted.

According to various embodiments, the communication circuit 215 may form a communication connection with an external electronic device (e.g., another electronic device 110 or 120, or the server 130) by various kinds of communication methods, and transmit and/or receive data. As described above, the communication method may include a communication method for setting a direct communication connection such as Bluetooth and Wi-Fi direct, a communication method using an access point (AP) (e.g., Wi-Fi communication), or a communication method using cellular communication using a base station (e.g., 3G, 4G/LTE, 5G).

Hereinafter, a plurality of artificial intelligence models 233 according to various embodiments will be described.

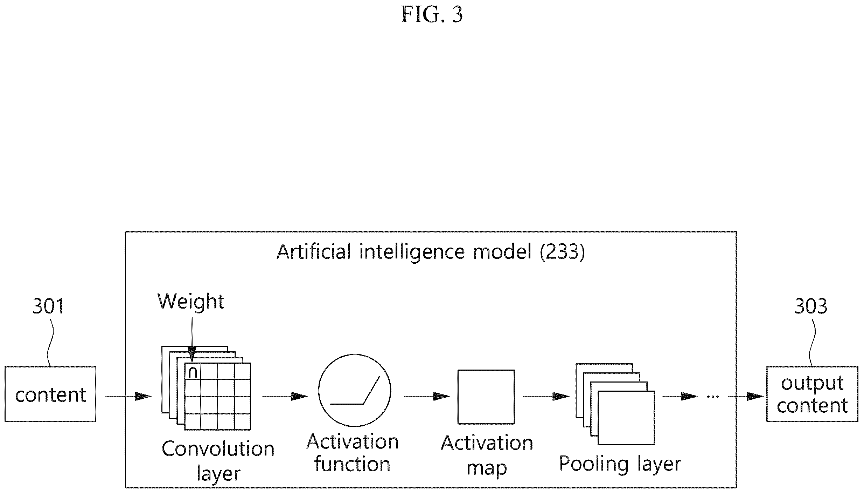

FIG 3 is a diagram for describing an example of an artificial intelligence model 233 according to various embodiments.

According to various embodiments, the artificial intelligence model 233 may be stored in the electronic device 101, the first external electronic device 110, and/or the second external electronic device 120. According to various embodiments, the server 130 may generate (or update) the artificial intelligence model 233, and perform various operations described in this disclosure using the generated artificial intelligence model 233. According to an embodiment, the server 130 may provide the generated artificial intelligence model 233 to the electronic device 101, and perform various operations described in this disclosure using the artificial intelligence model 233 provided (or downloaded) by the electronic device 101. According to an embodiment, the electronic device 101 may generate (or update) the artificial intelligence model 233, and perform various operations described in this disclosure using the generated artificial intelligence model 233.

According to various embodiments, the artificial intelligence model 233 is models that are learned in advance based on a specified kind of learning algorithm, and may be artificial intelligence models that are pre-implemented to receive and compute various kinds of data (or content) and output (or acquire) result data. For example, learning may be performed in the server 130 (or the electronic device 101) to output specific kinds of result data as output data by using specified kinds of data as input data based on a machine learning algorithm or a deep learning algorithm, and a plurality of artificial intelligence models 233 (e.g., machine learning models and deep learning models) may be generated. The machine learning algorithm may include supervised algorithms such as linear regression, logistic regression, unsupervised algorithms such as clustering, visualization and dimensionality reduction, and association rule learning, and reinforcement algorithms, and the deep learning algorithm may include Artificial Neural Network (ANN), Deep Neural Network (DNN), and Convolution Neural Network (CNN), and may further include various learning algorithms without limitation as described. The learned artificial intelligence model 233 may include at least one matrix (e.g., convolution layer and pooling layer) for computing input data, and may be implemented to output result data by computing input data based on the matrix. As an example, as shown in FIG 3, the artificial intelligence model 233 (e.g., a CNN model) may be generated by using information about the image data and the objects included in the image data as training data based on the CNN (e.g., setting the image data as input data, information about the objects (or subjects) as output data), and the generated artificial intelligence model 233 may be implemented to output the output content 303 (e.g., result data) including information about the objects (e.g., instance segmentation image data) by calculating the input image data using a convolution layer, an activation function (e.g., sigmoid, Relu), and a pooling layer in response to receiving the content 301 (e.g., image data). Meanwhile, although not shown in FIG 3, the deep learning model learned based on the cnn may include more layers in addition to the convolution layer and the pooling layer shown, and because it is well-known, detailed descriptions thereof will be omitted. As another example, the artificial intelligence model may be generated by using information about audio data and speakers as training data based on other learning algorithms (e.g., setting the audio data as input data, information about the speakers as output data), and the other artificial intelligence model may be implemented to output an identifier (e.g., unique ID) for identifying the speaker as result data in response to receiving the audio data (e.g., utterance).

According to various embodiments, the artificial intelligence model 233 may be implemented to include weights and activation functions of a matrix corresponding to the specified calculation capability (hereinafter, calculation value) (e.g., weight calculation value (e.g., weight precision)) of 32 bits and the activation function calculation value (e.g., activation function precision) of 32 bits. For example, the calculation value may be a value for calculating parameters such as weights or activation function (e.g., sigmoid, Relu), and may include calculation value (e.g., weight precision) for the weight and calculation value (e.g., activation precision) for the activation function.

Meanwhile, when the server 130 generates (or stores) the artificial intelligence model 233, the server 130 may receive various content from the electronic device 101, the first external electronic device 110, and/or the second external electronic device 120, and provide the result processed using the artificial intelligence model 233 to the electronic device 101. When the electronic device 101 generates (or stores) the artificial intelligence model 233, the electronic device 101 may process the acquired various content using the artificial intelligence model 233 and output the result.

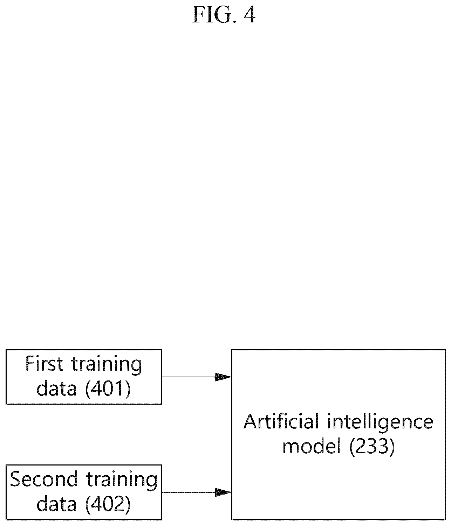

FIG 4 is a diagram for describing learning data according to various embodiments.

Referring to FIG 4, the artificial intelligence model 233 may be trained by the first training data 401 and the second training data 402. The first training data 401 may be input data, and the second training data 402 may be data to be output through the artificial intelligence model 233. For example, the artificial intelligence model 233 trained by the first training data 401 and the second training data 402 may receive the same kind of input data as the first training data(learning data) 401 and output the same kind of output data as the second training data(learning data) 402.

According to various embodiments, artificial intelligence models 233 may be implemented in plural. For example, when the first training data 401 includes information of a product to be described later and the second training data 402 includes product features to be described later and/or product feature values corresponding to the product features, a first artificial intelligence model may be generated according to learning data related to the product. When the first training data 401 includes the information of the celebrity described later and the second training data 402 includes the celebrity characteristics described later and/or the celebrity feature values corresponding to the celebrity characteristics, the second artificial intelligence model may be generated according to the learning data related to the celebrity.

According to an embodiment, a plurality of artificial intelligence models may be generated according to the type of celebrity (e.g., race (white, yellow, black), gender (male, female), etc.). For example, a third artificial intelligence model may be generated based on information related to celebrities of a first race (or first gender) (e.g., information of celebrities, celebrity characteristics, and celebrity characteristic values), and a fourth artificial intelligence model may be generated based on information related to celebrities of a second race (or second gender) (e.g., information of celebrities, celebrity characteristics, and celebrity characteristic values). In this case, at least one celebrity belonging to the selected celebrity type may be provided as a recommendation result through an artificial intelligence model corresponding to the selected celebrity type according to the type of celebrity selected by the electronic device 101 (i.e., advertiser) (e.g., race, gender, etc.).

Hereinafter, for convenience of explanation, the product-related artificial intelligence model and the celebrity-related artificial intelligence model are described with the same reference numeral 233, but as described above, it can be understood by those skilled in the art that the product-related artificial intelligence model and the celebrity-related artificial intelligence model can be separately implemented and used.

According to various embodiments, the artificial intelligence model 233 (e.g., the first artificial intelligence model) may use product information as the first training data 401 and P feature values (e.g., product feature vectors (Matrix of P×1 size)) corresponding to product features and/or product features as the second learning data 402.

For example, the product information may include an image, a name, a category, a description of the product, manufacturer information, or a URL of the manufacturer, but there is no limitation on the product information used as the first learning data 401. Information of a product may be provided by an advertiser (e.g., electronic device 101 of the advertiser), or may be collected by an external server (e.g., an external cloud server including various information of a product).

For example, the second learning data 402 may include a plurality of product characteristics and a plurality of feature values corresponding to the plurality of product characteristics. The "product characteristic" may be a specified characteristic related to the product. For example, the plurality of product features may include "innovative," "original," "economic," "trendy," "unique," etc. According to various embodiments, the plurality of product features may be set or changed in advance, and the number of plurality of product features is not limited. According to an embodiment, the plurality of product features may be determined based on the first learning data (e.g., information of the product). For example, when there is a posting that publishes information of a specific product in a social network service (SNS), additional information (e.g., hashtag) having a high frequency in the plurality of products may be determined as a candidate for the product features based on additional information (e.g., hashtag) related to (e.g., frequently mentioned) the information of the specific product. According to various embodiments, the plurality of feature values corresponding to the plurality of product features may be numerical values corresponding to each of the plurality of product features. For example, the second learning data 402 may include the plurality of feature values corresponding to each of the plurality of product features (e.g., "innovative," "unique," "economic," "trend," "unique," etc., as shown in Equation (1). The form of Equation 1 (Fp) (e.g., vector and/or matrix form) is only an example, and the form of the second learning data 402 is not limited.

## Math figure 1

$$F_p = \begin{pmatrix} p_1 \\ p_2 \\ p_3 \\ p_4 \\ p_5 \\ \vdots \\ p_p \end{pmatrix}$$

In Equation 1, p1 may indicate a first feature value (numerical value) corresponding to a first product feature (e.g., "innovative"), p2 may indicate a second feature value (numerical value) corresponding to a second product feature (e.g., "unique"), p3 may indicate a third feature value (numerical value) corresponding to a third product feature (e.g., "economical"), p4 may indicate a fourth feature value (numerical value) corresponding to a fourth product feature (e.g., "performing"), and p5 may indicate a fifth feature value (numerical value) corresponding to a fifth product feature (e.g., "unique"), and product property information (e.g., product feature vector (Fp)) may include p feature values corresponding to a total of p product features.

In this disclosure, for the sake of convenience of explanation, the feature value is described as a value within a range of 0 to 10, but the feature values may be defined in various ranges other than the aforementioned ranges (0 to 10). For example, the feature values may be set to 0 or 1. In this disclosure, a set of product feature values (e.g., vector and/or matrix form data (Fp)) is described as "characteristics of a product" (or product attribute information).

According to various embodiments, the artificial intelligence model 233 (e.g., the second artificial intelligence model) may use information of a celebrity as the first training data 401 and receive the celebrity features and/or feature values corresponding to the

For example, the information of the celebrity used as the first learning data 401 may include an image (and/or video) of the celebrity(the famous person), a name, age, height, weight, or description of the celebrity. There is no limitation on the information of the celebrity used as the first learning data 401. The information of the celebrity may be provided by the celebrity (e.g., the first external electronic device 110 of the

For example, the second learning data 402 may include a plurality of c feature values (e.g., a celebrity feature vector (a matrix having a size of c×1)) corresponding to a plurality of celebrity features and/or a plurality of celebrity features. "The celebrity feature" may be a designated feature related to a person. For example, the plurality of famous person features may include "cute," "lovely,", "cool," "gorgeous," "luxury," "healthy," and the like. The plurality of celebrity features may be preset or changed, and the number of the plurality of famous person features is not limited. According to an embodiment, the celebrity features may be determined based on the first learning data (e.g., information of the celebrity). For example, when there is a posting with information of a particular celebrity within sns, additional information (e.g., hash tag) related to the particular celebrity person (e.g., frequently mentioned), may be determined as candidates of the famous person features. According to various embodiments, the plurality of celebrity features may correspond to each of the plurality of famous person features. For example, the second learning data 402 may include a plurality of feature values respectively corresponding to a plurality of celebrity features (e.g., "Guangduk", "Hodduk", "Weeongduk", "Higher Advance", "Healthy"), such as Equation 2. The form of Equation 2 (Fc) (e.g., vector and/or matrix form) is only an example, and there is no limitation on the form of the second learning data 402.

## Math figure 2

$$F_c = \begin{pmatrix} c_1 \\ c_2 \\ c_3 \\ c_4 \\ c_5 \\ \vdots \\ c_c \end{pmatrix}$$

In Equation 2, c1 represents a first feature value (numerical value) corresponding to a first celebrityfeature (e.g., "Guangjun"), c2 represents a second feature value (numerical value) corresponding to a second celebrity feature (e.g., "Fancous"), c3 represents a third feature value (numerical value) corresponding to a third famous feature (e.g., "Wancous"), c4 represents a fourth feature value (numerical value) corresponding to a fourth celebrity feature (e.g., "Wancous"), c5 represents a fifth feature value (numerical value) corresponding to a fifth celebrity feature (e.g., "Higher Grade"), c6 represents a sixth feature value (numerical value) corresponding to a sixth celebrity feature (e.g., "Healthy"), and celebrity attribute information (e.g., celebrity feature vector Fc) may include C feature values corresponding to a total of C

Although the feature values are described as values in the range of 0 to 10 for the sake of description in this disclosure, the feature values may be defined in various ranges other than the above range (0 to 10). For example, the feature values may be set to 0 or 1. In this disclosure, a set of celebrity feature values (e.g., vector and/or matrix data Fc) will be described as "attribute of a celebrity" (or famous attribute information).

According to various embodiments, the celebrity attribute information may be determined to correspond to an image (and/or video) of a celebrity used as the first learning data. For example, even if the same celebrity is, the celebrity attribute information for the first image of the celebrity and the celebrity attribute information for the second image of the famous person may be different.

According to an embodiment, at least some of the above-described product features and celebrity features may be duplicated. For example, product features such as "Healthy" may be used as celebrity features for indicating the attributes of

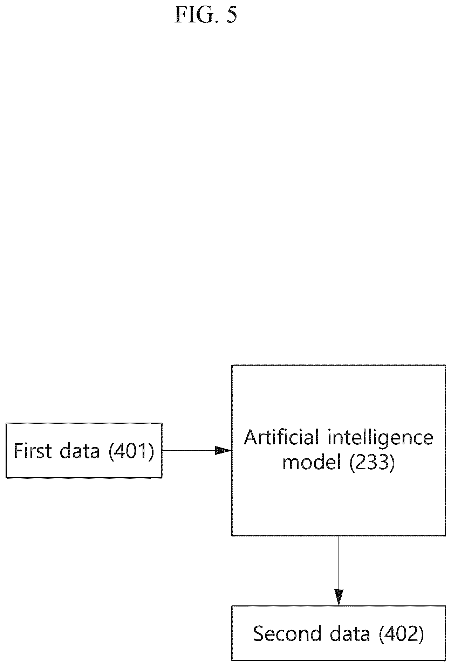

FIG 5 is a diagram for describing a trained artificial intelligence model, according to various embodiments.

Referring to FIG 5, the artificial intelligence model 233 may receive first data 501 and output second data 502. For example, the first data 501 may be the same kind of data as the first training data 401 of FIG 4, and the second data 502 may be the same kind of data as the second learning data 402 of FIG 4.

According to various embodiments, the artificial intelligence model 233 may receive product information as the first data 501 and output feature values corresponding to product features and/or product features as the second data 502. The feature values corresponding to the information, celebrity features, and famous features may be understood through the description of FIG 4.

According to various embodiments, the artificial intelligence model 233 may receive famous information as the first data 501 and output feature values corresponding to the second data 502. The feature values corresponding to the information, celebrity features, and famous features may be understood through the description of FIG 4.

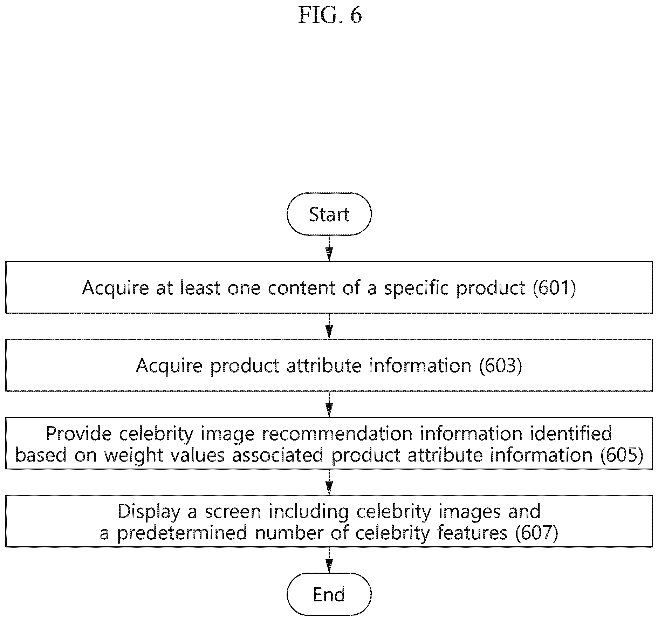

FIG 6 is a flowchart illustrating a method of operating an online advertisement content platform providing system according to various embodiments.

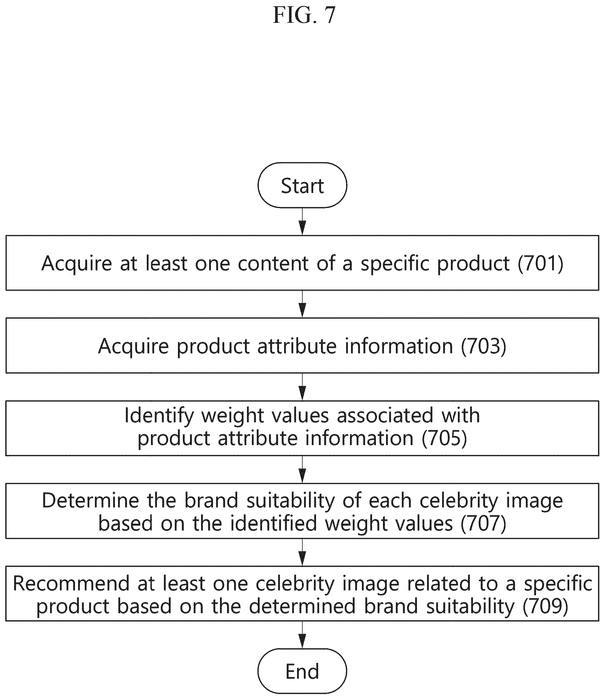

The operations of FIG 6 and the operations of FIG 7 may be organically performed, and at least some of the operations of FIG 6 and the operations of FIG 7 may be omitted.

Hereinafter, operations 601 to 605 are described as being performed by the server 130, but when the electronic device 101 includes the artificial intelligence model 233, at least some of the operations 601 to 605 may be performed by the electronic device 101.

According to various embodiments, in operation 601, the server 130 may acquire at least one content of a specific product. For example, the server 130 may acquire (e.g., receive) at least one content of a specific product from the electronic device 101. For example, the at least one content may include information (e.g., image, name, category, description) of the specific product. According to various embodiments, the server 130 may receive and acquire at least one content of a specific product input through the electronic device 101. At least some of the at least one content of the specific product may be collected by an external server (e.g., an external cloud server including various products).

According to various embodiments, in operation 603, the server 130 may acquire product attribute information. For example, the server 130 may acquire product attribute information (e.g., product feature values of a specific product in the form of Equation 1) of the specific product based on the acquired at least one content using the artificial intelligence model 233. As another example, when the electronic device 101 acquires product attribute information of the specific product using the artificial intelligence model 233, the acquired product attribute information may be provided to the server 130. According to an embodiment, even if the same celebrity is, the celebrity attribute information may be different depending on the image (photo and/or moving image) of the celebrity. For example, in the specific celebrity, the first () image (e.g., a laughter image) may have a high feature value of the first celebrity feature (e.g., "Gui Yeong-yun"), and the second image (e.g., an exercising image) may have a high feature value of the sixth celebrity feature (e.g., "Health").

According to various embodiments, in operation 605, the server 130 may provide celebrity image recommendation information identified based on weight values associated with the product attribute information.

Hereinafter, an example of a method of recommending at least one celebrity image by the server 130 will be described.

According to various embodiments, the server 130 may identify weight values associated with the product attribute information. For example, the weight values may be expressed in the form of a matrix (hereinafter, weight matrix (w)) of 1xC magnitude.

Math figure 3

$$W = \begin{pmatrix} w_1 \\ w_2 \\ w_3 \\ w_4 \\ w_5 \\ \vdots \\ w_c \end{pmatrix}$$

According to various embodiments, weight values $w_1, w_2, ..., w_c$ of Equation 3 may be calculated differently according to product attribute information (e.g., product feature values). The weight values $w_1, w_2, ..., w_c$ may correspond to feature values that are famous in the same row, respectively. For example, the Nth weight value $w_n$ of the Nth row may correspond to the Nth celebrity feature value cn of the Nth row.

According to various embodiments, the weight matrix W may be calculated from the calculation result of the product attribute information and the reference matrix M.

Math figure 4

$$W = ( F_p^{\ T} \cdot M )^T$$

Math figure 5

$$M = \begin{pmatrix} m_{11} & \cdots & m_{1c} \\ \vdots & \ddots & \vdots \\ m_{p1} & \cdots & m_{pc} \end{pmatrix}$$

Referring to Equation (4), a weight matrix (W) related to product attribute information of a specific product may be calculated as a matrix calculation result of product feature vectors (Fp) and reference matrix (M). Referring to Equation 5, the reference matrix m may be defined as a matrix of size p x c. The reference matrix m may be common regardless of a specific product (e.g., regardless of product attribute information), and the weight matrix w related to the specific product may be calculated as the result of the calculation of the product feature vector of the specific product in the same reference matrix M.

According to various embodiments, the reference information (e.g., the reference matrix (M)) may be updated based on the result of the advertisement execution, and the detailed description will be described later.

According to various embodiments, the server 130 may provide at least one celebrity image from among a plurality of celebrity images as a result of recommending the famous image based on the weight matrix w. For example, the server 130 may calculate brand fit (or expected advertisement effect (e.g., expected CTR (click through ratio)) from the named attribute information of the named images by using the weight matrix (W) identified in relation to the product attribute information of a specific product, and the calculation method will be described in more detail with reference to the drawings described below. The server 130 may provide the electronic device 101 with information including at least one famous image having a high brand fit (or expected advertisement effect).

According to various embodiments, in operation 607, the electronic device 101 may display a screen including celebrity images and a predetermined number of celebrity features (display). According to various embodiments, the electronic device 101 may receive information including at least one celebrity image from the server 130 and display at least one recommended famous image based on the received information. According to various embodiments, the electronic device 101 may identify a specified number of celebrity features among a plurality of famous features. For example, the server 130 may identify weight values of the weight matrix w identified in relation to product attribute information of a specific product. The server 130 may identify a specified number of weight values among the weight values. For example, the server 130 may compare the size of the weight values to identify the specified number of weight values having a large size. The server 130 may provide (e.g., transmit) information including the identified predetermined number of weight values, predetermined number of celebrity features corresponding to the predetermined number of weight values (e.g., located in the same row), and/or feature values of the predetermined number of famous features to the electronic device 101. The electronic device 101 may display the specified number of famous features based on the information provided from the server 130. According to an embodiment, the electronic device 101 may display the celebrity feature values of the specified number of famous features together, and will be described in more detail with reference to the drawings described later. According to an embodiment, the electronic device 101 may display at least one recommended celebrity image together with another image of the celebrity corresponding to the recommended celebrity image, and will be described in more detail with reference to the following drawings.

FIG 7 is a flowchart illustrating an operating method of an online advertisement content platform providing system according to various embodiments.

Hereinafter, operations 701 to 709 are described as being performed by the server 130, but when the electronic device 101 includes the artificial intelligence model 233, at least some of operations 701 to 709 may be performed by the electronic device 101.

The operations of FIG 6 and the operations of FIG 7 may be organically performed, and at least some of the operations of FIG 6 and the operations of FIG 7 may be omitted.

According to various embodiments, the server 130 may acquire at least one content of a specific product in operation 701. Operation 701 may be operation 601, and descriptions in overlapping scopes are omitted.

According to various embodiments, the server 130 may acquire product attribute information in operation 703. Operation 703 may be operation 603, and descriptions in overlapping scopes are omitted.

According to various embodiments, the server 130 may identify weight values related to product attribute information in operation 705. For example, the server 130 may identify weight values (e.g., weight matrix (W) of Equation 4) related to product attribute information of a specific product based on the product attribute information (e.g., Fp of Equation 1) and reference information (e.g., reference matrix (M) of Equation 5) of the acquired specific product.

According to various embodiments, the server 130 may identify brand fit(suitability) (or expected advertisement effect) for each celebration image based on the identified weight values in operation 707. According to various embodiments, the server 130 may store celebration images in relation to the celebration images (e.g., Fc of Equation 2) for a plurality of celebration images. The server 130 may identify brand fit (or expected advertisement effect) of each celebration image from the calculation results of the celebration attribute information of each celebration image and the weight values (e.g., weight matrix (w) of Equation 4) identified in relation to the specific product.

## Math figure 6

$$S = W^T \cdot F_c$$

Referring to Equation 6, the brand suitability S may be calculated as a value of $1 \times 1$ size (i.e., scalar value) as a result of a matrix multiplication operation of a weight matrix W of $1 \times 1$ size and a celebrity feature vector Fc of $C \times 1$ size. The brand suitability (s) of each celebrity image may be displayed through the electronic device 101 in the form of a numerical and/or graphical object in a percentage form, and will be described in more detail with reference to the drawings described later.

According to various embodiments, in operation 709, the server 130 may recommend at least one celebrity image related to a specific product based on the determined brand suitability (or the expected advertisement effect). For example, the server 130 may recommend at least one celebrity image having a high brand fit (or expected advertisement effect) among the plurality of celebrity images as the celebrity image related to the specific product based on the brand fit (or expected advertisement effect) (s) of each celebrity image.

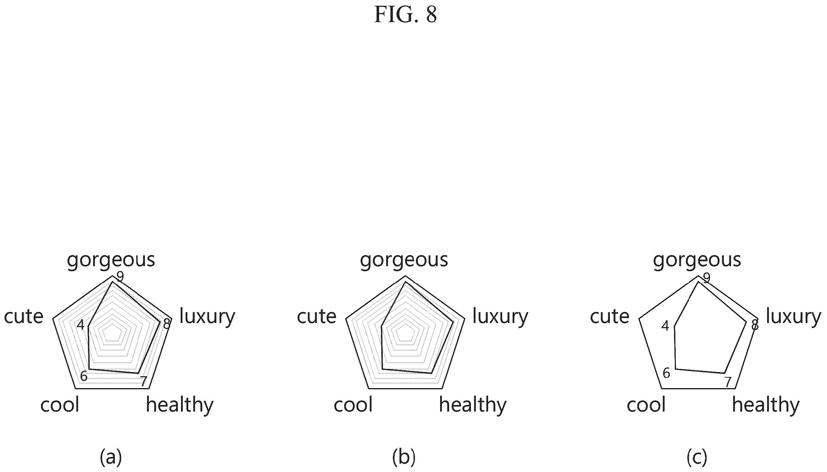

FIG. 8 is a diagram illustrating examples of graphic objects included in a screen recommending a celebrity according to various embodiments.

According to various embodiments, a screen recommending a celebrity may include a graphic object indicating a specified number of celebrity features and/or feature values of the celebrity feature (hereinafter, a celebrity feature value).

According to various embodiments, the electronic device 101 may display a specified number of famous features through a graphic object. For example, the indicated celebrity features may be famous features (e.g., located in the same row) that correspond to a specified number of weight values having a larger size among weight values (e.g., weight matrix (w) of Equation 4) related to product attribute information of a specific product.

According to various embodiments, the order in which the famous features are displayed may be determined based on the size of the corresponding weight values. For example, from the famous feature corresponding to a relatively large weight value in size to the celebrity feature corresponding to a relatively small weight value in order, it may be displayed in the first direction (e.g., clockwise).

According to various embodiments, the electronic device 101 may display famous feature values through a graphic object. For example, for each celebrity image, among the celebrity attribute information of each celebrity image, the celebrity feature values corresponding to the specified number of celebrity features displayed through the graphical object may be displayed.

Based on the above descriptions, FIGS 8(a) to 8(c) will be described.

Referring to FIGS 8(a) to 8(c), regarding the image of a particular celebrity, the features of celebrity "gorgeous", "luxury", "healthy", "cool" and "cute" are displayed through a graphical object. This indicates that among the weight values identified based on product attribute information of a specific product, the weight values corresponding to the famous characteristics of "gorgeous", "luxury", "healthy", "cool" and "cute" are relatively high. If the entire celebrity feature is composed in the order of a first celebrity feature ("cute"), a second celebrity feature ("lovely"), a third celebrity feature ("cool"), a fourth celebrity feature ("gorgeous"), a fifth

Referring to FIGS 8(a) and 8(c), numerical values (e.g., 9, 8, 7, 6, 5) corresponding to each famous feature are displayed through the graphic object. This indicates celebrity feature values corresponding to each of the famous features "gorgeous", "luxury", "healthy", "cool", and "cute". As shown in FIGS 8(a) and 8(b), the electronic device 101 may display the numerical values (e.g., famous feature values) in the form of a radial graph. Alternatively, as shown in FIG 8(c), the electronic device 101 may display the numerical values in a polygonal form (e.g., pentagon) that connects points representing the numerical values (e.g., famous feature values). Meanwhile, as shown in FIG 8(b), the numerical values (e.g., 9, 8, 7, 6, 5) may be omitted to correspond to each famous feature.

As described above, the features displayed through the graphic object may be determined based on weight values related to product attribute information (e.g., according to the size of the weight values). That is, since product attribute information may vary depending on the advertising target product, a group of famous features displayed through the graphic object may vary depending on the advertising target product. In other words, when the advertising target product is the first product, the celebrity features of the first group may be displayed, and when the advertising target product is the second product having different product attribute information from the first product, the celebrity features of the second group may be displayed, and all or some of the celebrity features of the first group and the famous features of the second group may be different.

As described above, the numerical values displayed through the graphic object may be determined based on the celebrity feature values of each celebrity image (e.g., according to the size of the famous feature values). That is, since the celebrity attribute information may vary depending on the celebrity image, the numerical values (and/or the form of a radial graph) displayed through the graphic object may be different depending on the famous image.

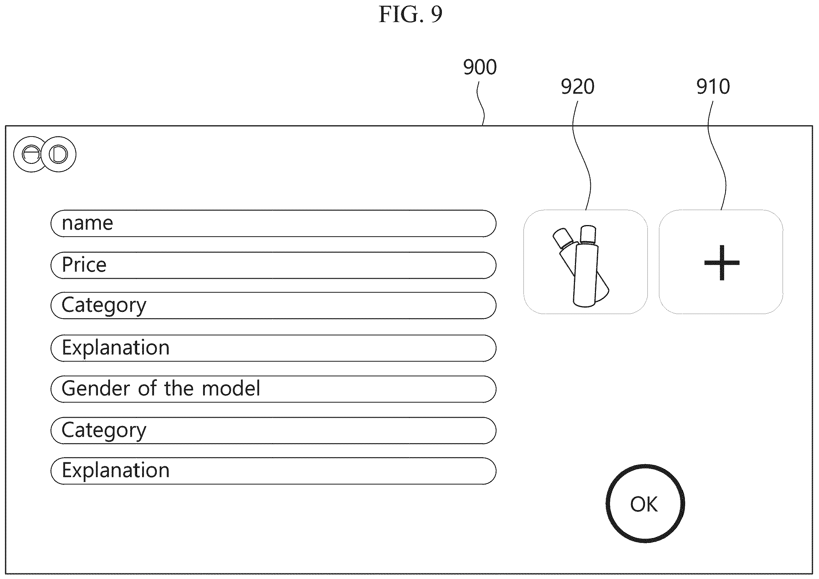

FIG 9 illustrates an example of a screen for receiving information of a specific product according to various embodiments.

According to various embodiments, the electronic device 101 may display a screen 900 for receiving content of a specific product to be advertised. For example, an advertiser may input information on a product to be advertised through the screen 900 displayed on the electronic device 101. For example, the screen 900 may include an interface for receiving information about a product (e.g., name, price, category, description, image) and information about a preferred advertising model (e.g., gender, category, description). For example, the screen 900 may include an interface (e.g., 910 and 920) for receiving an image of a product and displaying the received image. For example, the screen 900 may further include an interface for designating a country that the advertiser wants to advertise. According to various embodiments, the electronic device 101 may provide the content (e.g., name, price, category, description, image related to the product) of the product received through the screen 900 to the server 130 to obtain product attribute information (e.g., feature values corresponding to a plurality of product features) of a specific product that the advertiser wants to advertise, or obtain product attribute information (e.g., feature values corresponding to a plurality of product features) of a specific product that the advertiser wants to advertise based on the content (e.g., name, price, category, description, image related to the product) of the product received through the screen 900.

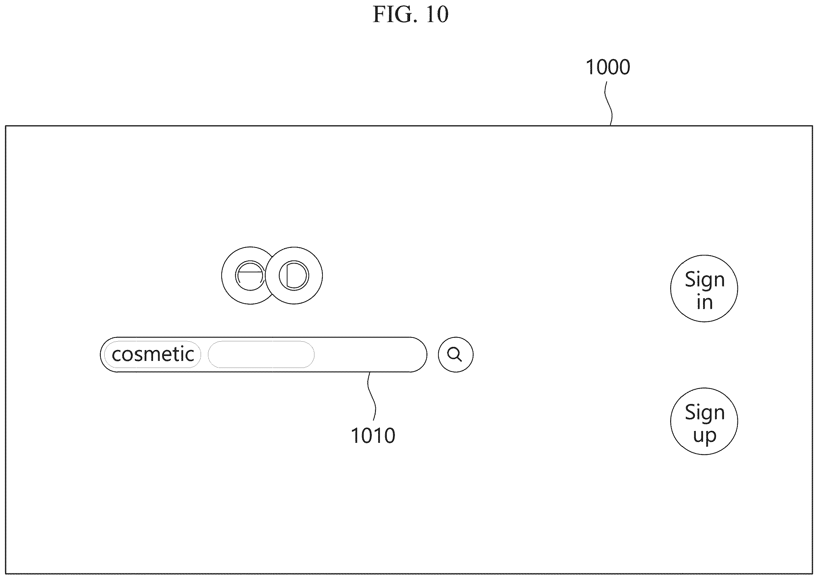

FIG 10 illustrates an example of a screen for receiving product category information according to various embodiments.

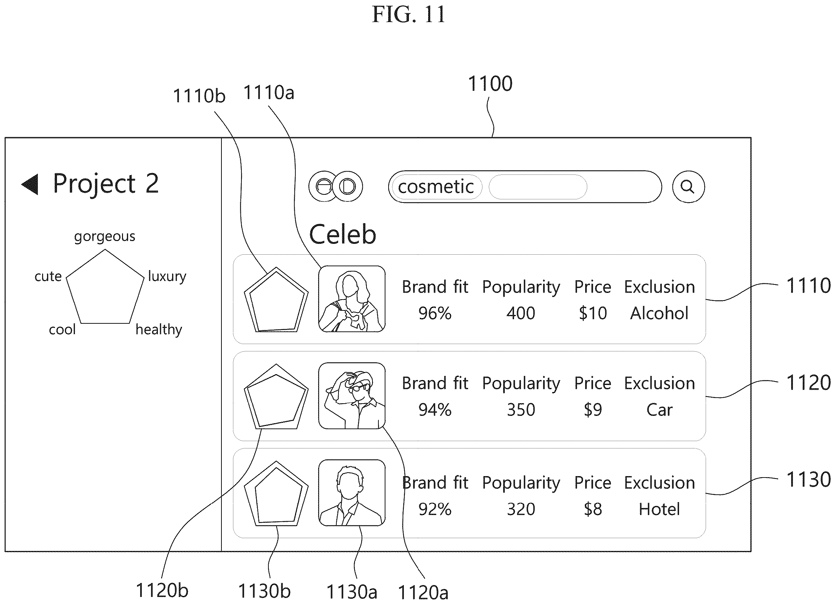

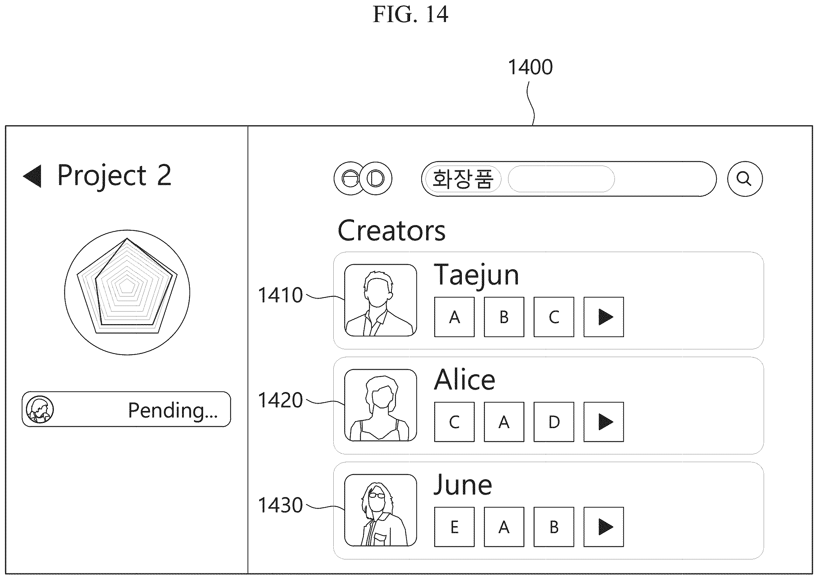

According to various embodiments, the electronic device 101 may display a screen 1000 including a search interface 1010. For example, the electronic device 101 may receive a product category through the search interface 1010 and provide information about a celebrity (or celebrity image) related to the received product category. For example, as shown in the drawing, when "cosmetics" are input through the search interface 1010, a celebrity (or celebrity image) related to "cosmetics" may be searched. For example, at least one celebrity image of a celebrity input as a product category preferring a product category named "cosmetics" or a celebrity or at least one celebrity image with a high or high advertising performance for specific products having a product category "cosmetics" may be searched. According to an embodiment, the screen (e.g., screen 1100) of FIG 11 or the screen (e.g., screen 1400) of FIG 14 described below may be displayed according to the search through the screen 1000.

FIG 11 illustrates an example of a screen for recommending a celebrity according to various embodiments.

According to various embodiments, the electronic device 101 may display a screen 1100 for recommending at least one celebrity image. For example, through the method described in the above drawings, the electronic device 101 may display a screen for recommending at least one celebrity image through the process of obtaining product attribute information of a specific product when at least one content of the specific product is input. Alternatively, as described above with reference to FIG 10, based on the input of a product category through the search interface 1010, recommendation results for at least one celebrity or at least one celebrity image related to the input product category may be displayed.

According to various embodiments, the information about the celebrity displayed may include information about the image, brand fit, popularity, advertising contract price, and exclusion.

According to various embodiments, the product fit may be calculated based on the weight values related to each celebrity image and/or each celebrity image.

According to various embodiments, the Popularity may be an indicator indicating the popularity of the celebrity in real time or a future time point. For example, the Popularity may be confirmed in real time based on Internet search amount data. For example, the Popularity may be calculated or predicted based on a future time point according to a future work plan of the celebrity. For example, the Popularity of the celebrity may be confirmed differently (e.g., perceived by country) depending on the country to be advertised.

According to various embodiments, the advertisement contract price (Price) may indicate the cost per click (CPC) of the celebrity. The advertisement contract price may be set in advance, and may be determined based on the advertisement performance and/or real-time awareness of the advertisement previously executed by the celebrity. According to an embodiment, when the advertiser inputs the advertisement execution period and/or the advertisement budget, the celebrity having the advertisement contract price that does not belong to a range calculated based on the advertisement execution period and/or the advertisement budget may be excluded from the recommendation result.

According to various embodiments, the exclusion may indicate the category of the product excluded by the celebrity. For example, when a specific celebrity registers "Alcohol" as the exclusion product, when the category of the specific product is "Alcohol," the specific celebrity may be excluded from the recommendation result.

According to various embodiments, a reference by searching for at least one celebrity image may be displayed in one region (e.g., the left region) of the screen 1100. As described in FIG 8, information related to celebrity features corresponding to a relatively high number of specified weight values may be provided. For example, the celebrity features may be provided in a text form and/or in a pentagonal shape similar to the graphic object of FIG 8.

According to various embodiments, the information on the celebrity displayed may include the image 1110a, 1120a, and 1130a with the highest brand suitability among the celebrity images of the celebrity. According to an embodiment, a plurality of images with high brand suitability among the celebrity images of the celebrity may be displayed.

According to various embodiments, the information on the celebrity displayed may include graphic objects 1110b, 1120b, and 1130b representing the celebrity feature values of each celebrity (or each celebrity image). According to various embodiments, each graphic object may indicate the celebrity feature values of each celebrity corresponding to a relatively high number of specified weight values, and a portion already described in FIG 8 is omitted. According to an embodiment, although a celebrity feature such as "gorgeous" may not be displayed in graphic objects 1110b, 1120b, and 1130b may not be displayed in graphic object 1110b, 1120b, and 1130b may be displayed in graphic object 1110b, 1120b, and 1130b may be displayed in graphic object 1110b, 1120b, and 1130b may be displayed in graphic object 1110b, 1120b, and 1130b may be displayed in graphic object 1110b, 1120b may be displayed in graphic object 1110b, 1120b may be displayed in graphic object 1110b, 1120b may be displayed in graphic object 1110b, 1120b may be displayed in graphic object 1110b, 1120b may be displayed in graphic object 1110b, 1120b may be displayed in graphic object 1110b, 1120b may be displayed in graphic

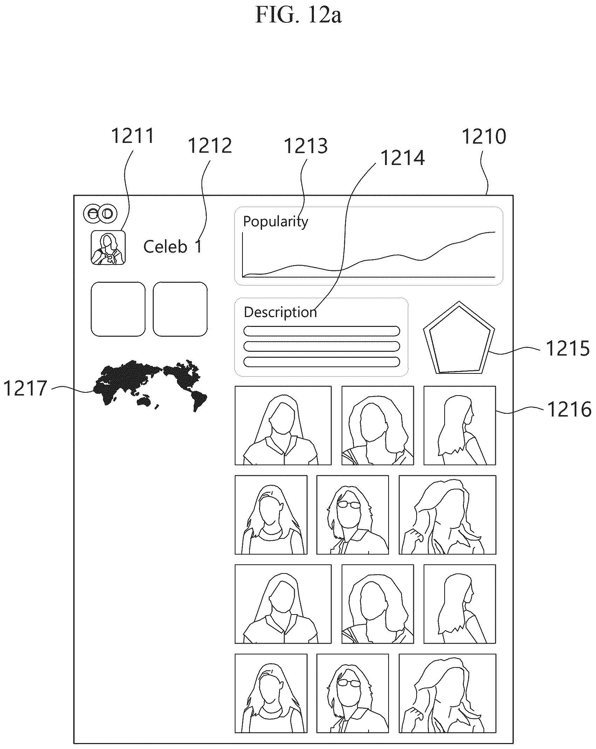

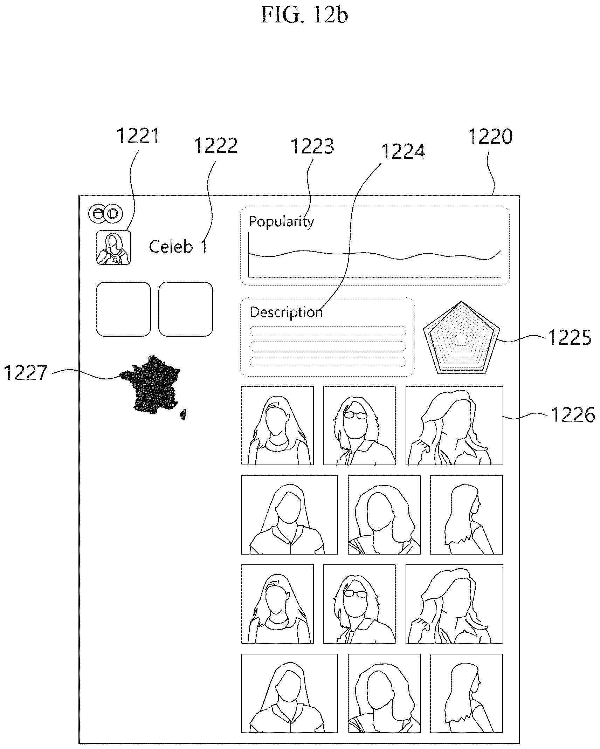

FIG 12A illustrates an example of a profile of a particular celebrity according to various embodiments. FIG 12B illustrates an example of a profile of a particular celebrity according to various embodiments.

According to various embodiments, when a specific celebrity (or an image of a specific celebrity) is selected from the recommendation result of the celebrity, the electronic device 101 may display a screen 1210 including the profile of the selected celebrity.

According to various embodiments, the screen 1210 may include a representative image 1211, a name 1212, a popularity 1213, an explanation 1214, an object 1215 (e.g., a radial graph) representing a famous feature, a portfolio 1216, and an object 1217 representing a country. According to various embodiments, the representative image 1211 may be an image (e.g., an image with high brand suitability) displayed in the celebrity image recommendation screen, or the celebrity may be a preset image.

According to various embodiments, portfolio 1216 may include at least one image of the selected celebrity. According to an embodiment, when the selected celebrity registers a plurality of images, the electronic device 101 may include a specified number of images with high brand suitability among the plurality of images in the portfolio 1216 (or disposed at the top of the portfolio 1216).

According to various embodiments, the popularity 1213 displayed on the screen 1210 of FIG 12A may be displayed as a graph according to time points. The popularity 1213 displayed on the screen 1210 may be determined according to at least one country indicated by the object 1217 indicating the country displayed on the screen 1210. For example, the object 1216 representing the country displayed on the screen 1210 may be the object 1216 displaying countries that are expected to be advertised by the product.

According to various embodiments, the popularity 1223 displayed on the screen 1220 of FIG 12B may be displayed as a graph according to a time point. The popularity 1223 displayed on the screen 1220 may be determined according to at least one country indicated by the object 1226 indicating the country displayed on the screen 1220. For example, the object 1227 representing the country displayed on the bottom 1220 of FIG 12B may be the object 1227 displaying a specific country (e.g., one country) that is expected to advertise a product, and accordingly, the popularity 1213 displayed on the screen 1210 of FIG 12A and the popularity 1223 displayed on the screen 1220 of FIG 12B may be different.

According to various embodiments, the objects 1215 and 1225 may represent a predetermined number (e.g., five) of celebrity features and their feature values having a high magnitude of the celebrity feature value among the plurality of famous features, and may be displayed in the form of a radial graph, for example. According to an embodiment, the object 1215 may represent famous features corresponding to a predetermined number of weight values with high weight values in relation to a specific product, similar to the graphic object illustrated in FIG 8 and/or the graphic objects 1110a, 1110b, and 1110c of FIG 11.

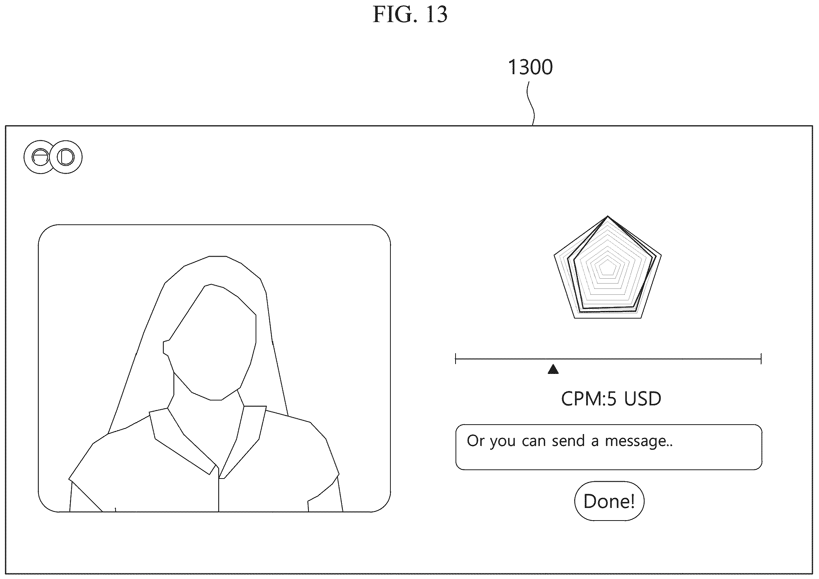

FIG 13 illustrates an example of an interface screen for mediating negotiation between advertisers and celebrities according to various embodiments.

According to various embodiments, when a specific celebrity (or an image of a specific celebrity) is selected from the recommendation result of the celebrity, the electronic device 101 may display a screen 1300 including a negotiation mediation interface. The screen 1300 may include celebrity characteristics and their characteristic values for the celebrity, an advertisement contract cost (or range) desired by the celebrity and/or a message input phrase.

According to various embodiments, the electronic device 101 may provide an interface for negotiating with the selected celebrity. For example, the advertiser may set an advertisement contract cost, input a message to be transmitted to the celebrity through the message input phrase, and allow the advertisement contract cost and the message to be transmitted to the celebrity to allow the negotiation to be conducted.

FIG 14 illustrates an example of a screen showing a recommendation screen of a creator according to various embodiments.

According to various embodiments, the electronic device 101 may display a screen 1400 for recommending at least one creator. For example, the screen 1400 may include an image, a nickname, and a specification of the creator (e.g., a technical field that the creator may provide, an advertisement contract cost, and a history). According to an embodiment, the at least one creator displayed may include a creator related to the input product category (e.g., "cosmetic") and/or information of a specific product that the advertiser wants to advertise. The "Pending" displayed on the left side of the screen 1400 may indicate a process of negotiating with the celebrity selected by the advertiser, and when the celebrity accepts the advertisement contract cost etc presented by the advertiser, the "Pending" may be changed to a text such as "Accepted."

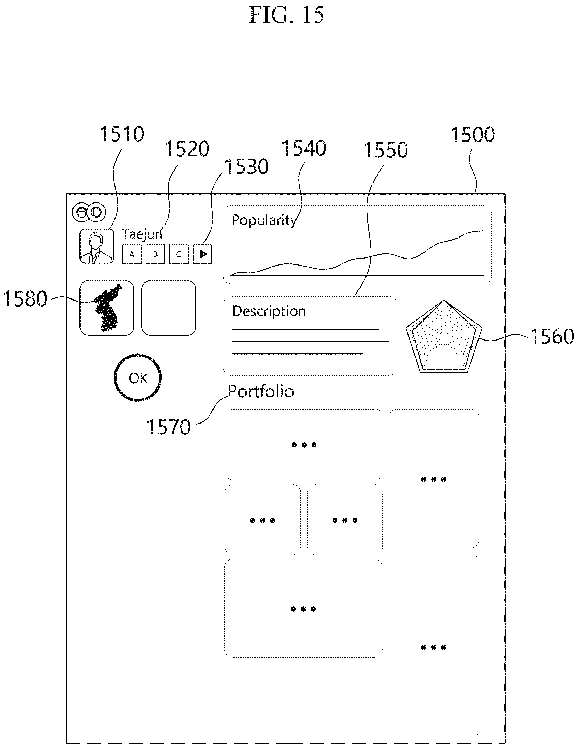

FIG 15 illustrates an example of a profile of a specific creator according to various embodiments.

According to various embodiments, when a specific creator (or an image of the creator) is selected from the recommendation result of the creator, the electronic device 101 may display a screen 1500 including the profile of the selected creator.

According to various embodiments, the screen 1500 may include a representative image 1510 of the selected creator, a name (or nickname) 1520, a specification 1530 of the creator (e.g., a technical field that the creator may provide), a popularity 1540, an explanation 1550, an object 1560 (e.g., a radial graph) indicating a capability of the creator, a portfolio 1570 (e.g., a previous work result), and an object 1580 (e.g., a nationality of the creator or a country in which the creator is active) indicating a country related to the creator.

According to various embodiments, the portfolio 1570 may include at least one previous work result of the selected creator. According to an embodiment, when the selected creator registers a plurality of work results, the electronic device 101 may include a designated number of work results having high brand fit amongiven the plurality of work results (or the portfolio 1570 is disposed at the top) of the plurality of work results.

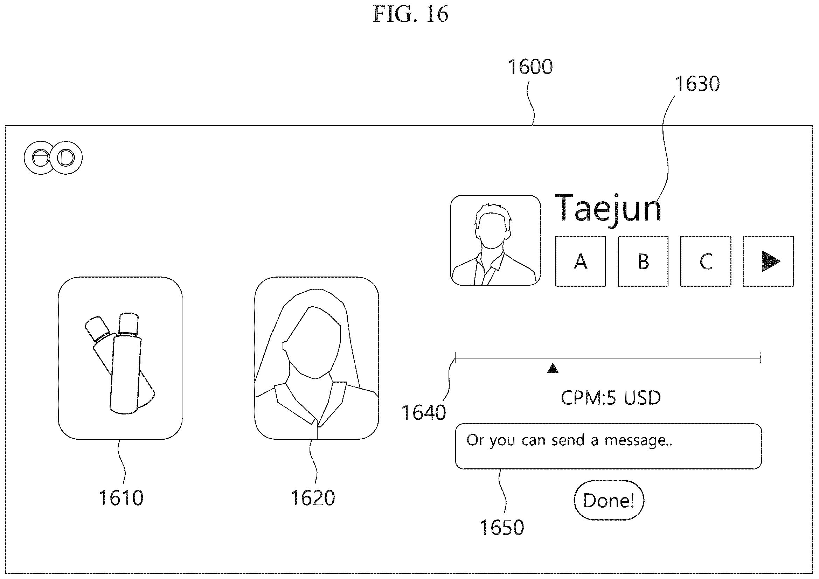

FIG 16 illustrates an example of an interface screen for mediating a negotiation between an advertiser and a creator according to various embodiments.

According to various embodiments, the electronic device 101 may display a screen 1600 including a negotiation brokerage interface. For example, the screen 1600 may include an image 1610 of a specific product that the advertiser wants to advertise, an image 1620 of a celebrity selected by the advertiser, information 1630 of a creator (e.g., an image, nickname, and spec of the creator), an object 1640 that specifies the advertisement contract unit price, and a message input 1650. The advertiser may negotiate with the selected creator through the screen 1600 displayed on the electronic device 101. The creator may identify the image 1610 of a specific product that the advertiser wants to advertise, the image 1620 of a celebrity selected by the advertiser, the cost of advertising contracts desired by the advertiser, and/or the message input by the advertiser, and negotiation between the advertiser and the creator may be conducted accordingly.

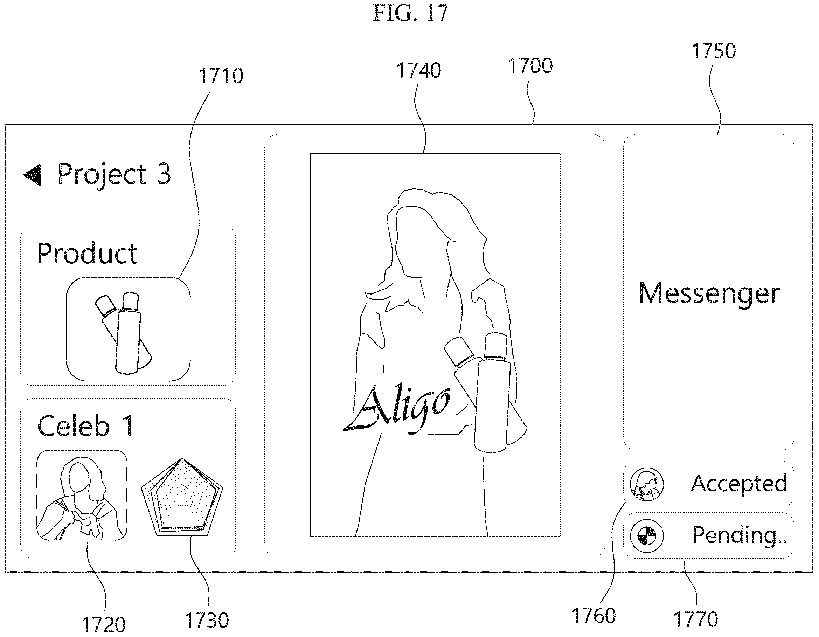

FIG 17 illustrates an example of a result screen of an advertisement brokerage platform according to various embodiments.

According to various embodiments, the electronic device 101 may display the result screen 1700 of the advertisement brokerage platform. For example, the progress status of the advertisement production work may be displayed through the screen 1700. For example, when an advertisement image is produced and registered based on the image 1710 of a specific product received by the creator selected by the advertiser and the image 1720 of a celebrity person, the produced advertisement image 1740 may be displayed through the screen 1700.

According to various embodiments, the screen 1700 may further include an object 1730 (e.g., a radial graph) indicating a famous feature, a dialogue interface 1750, a first indicator 1760, and/or a second indicator 1770.

According to various embodiments, the first indicator 1760 may be an object indicating whether the celebrity accepted the contract. For example, the screen 1700 of FIG 17 illustrates that the celebrity has accepted the contract ("Accepted").

According to various embodiments, the second indicator 1770 may be an object indicating whether the creator accepted the contract. For example, the screen 1700 of FIG 17 illustrates that the creator has not yet accepted the contract ("Pending").

According to various embodiments, a conversation may be performed between the celebrity or creator and the advertiser through the conversation interface 1750.

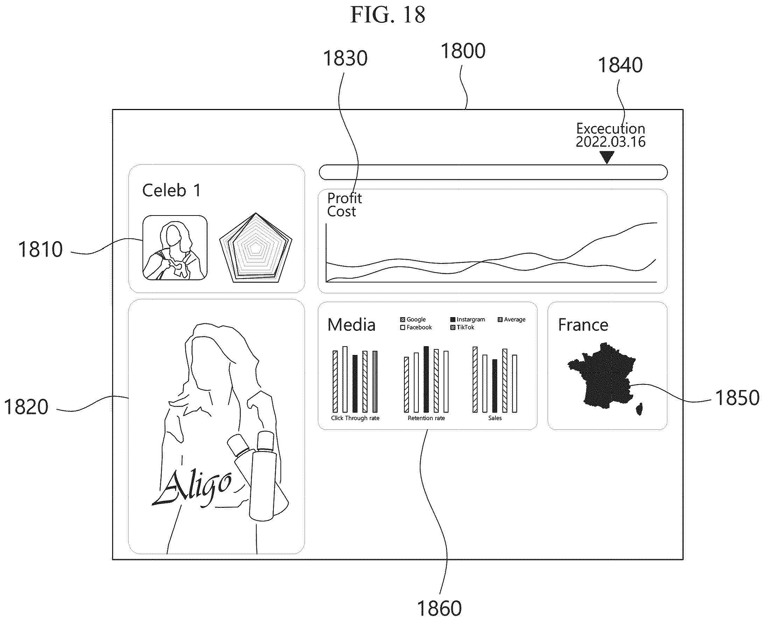

FIG 18 illustrates an example of advertisement enforcement results according to various embodiments.

According to various embodiments, the electronic device 101 may display a screen 1800 indicating the result (e.g., advertisement performance) of advertisement execution. For example, the screen 1800 may include a first image 1810 (e.g., an image of a celebrity used in an advertisement or a representative image of a celebrity), a second image 1820 (e.g., an advertisement image executed by an advertisement), a profit/cost graph 1830, an object 1840 indicating advertisement execution dates, an object 1850 indicating an advertisement target country, and an object 1860 indicating advertisement performance.

According to various embodiments, the screen 1800 may include only one image among the first image 1810 or the second image 1820, or may include both the first image 1810 and the second image 1820. The electronic device 101, the first external electronic device 110, or the second external electronic device 120 may determine which image among the first image 1810 or the second image 1820 is to be included depending on whether it is a screen provided to the advertiser, a screen provided to the celebrity, or a screen provided to the creator.

According to various embodiments, the object 1860 representing the advertisement performance may include an object representing "click through rate", "retention rate", and/or "sales" for each medium (e.g., SNS). The electronic device 101 may check the advertisement performance of the advertisement image and display the object 1860 representing the advertisement performance on the screen 1800. According to various embodiments, the electronic device 101 may update the reference values (e.g., the reference matrix m) for determining the celebrity feature of the celebrity (or image of the celebrity) used in the advertisement image, product attribute information of the target product of the advertisement image, or weight values for the specific product (or product attribute information) based on the advertisement performance corresponding to the advertisement image. For example, the server 130 may commonly use the reference values (e.g., the reference matrix m) regardless of the specific product (or product attribute information), and may check the advertisement performance of each advertisement product according to the advertisement image prepared by recommending the celebrity image for each advertisement product based on the specific reference values (e.g., the reference matrix m). The server 130 may update (or adjust) the specific reference values (e.g., the reference matrix m) based on the advertisement performance to the reference values (e.g., the reference matrix m) for maximizing the advertisement performance.

It can be understood that the embodiments of FIGS 1 to 18 may be applied mutually organically within the applicable range.

According to various embodiments, the online advertisement content platform providing system includes a server and an electronic device, wherein the server is configured to obtain at least one content of the specific product from the electronic device, wherein the at least one content includes an image of the specific product, and obtain product attribute information of the specific product based on the at least one content, wherein the product attribute information corresponds to a plurality of product features, and provide the electronic device with the celebrity image recommendation information identified based on a plurality of weight values related to the plurality of product features based on the product attribute information, wherein the celebrity image recommendation information includes at least one celebrity image, wherein the electronic device is configured to display a first screen including at least one celebrity image and a predetermined number of celebrity features among the plurality of celebrity features based on the provided celebrity image recommendation information, wherein the predetermined number of celebrity features include a first group of celebrity features among the plurality of celebrity features based on the specific product being the first product, and wherein the designated number of celebrity features include a second group of celebrity features among the plurality of celebrity features based on the specific product being the second product.

According to various embodiments, the predetermined number of celebrity features may correspond to the designated number of weight values, respectively.

According to variousous embodiments, the first screen may include celebrity feature values corresponding to the designated number of celebrity features corresponding to each of the at least one celebrity image.

According to variousous embodiments, According to various embodiments, the electronic device may be further configured to provide a mediation interface with a first celebrity of a first celebrity image, if the first celebrity image among the at least one celebrity image displayed on the first screen is selected.

According to various embodiments, the electronic device may be further configured to, if the first celebrity image among the at least one celebrity image displayed on the first screen is selected, display a second screen providing an image of the specific product, the selected first celebrity image, and an advertisement image generated based on the image of the specific product and the selected first celebrity image.

According to various embodiments, the server may be configured to compare the sizes of the plurality of weight values, and determine a predetermined number of weight values having a larger size among the plurality of weight values based on the result of the comparison.

According to various embodiments, the server may be further configured to identify the celebrity attribute information of the plurality of celebrity images, perform calculations on the plurality of weight values and the identified celebrity attribute information, and identify the at least one celebrity image based on the result of the calculations.

According to various embodiments, the plurality of weight values may be identified based on a reference matrix and first product attribute information of the first specific product based on the specific product being the first product, and based on the specific product being the second product, the first product attribute information and the second product attribute information of the second specific product may be at least partially different.

According to various embodiments, an operating method of an online advertisement content platform providing system includes: obtaining, by the server, at least one content of the specific product from the electronic device, wherein the at least one content includes an image of the specific product; obtaining, by the server, product attribute information of the specific product based on the at least one content, wherein the product attribute information corresponds to a plurality of product features; providing, by the server, celebrity image recommendation information identified based on a plurality of weight values related to the plurality of product features to the electronic device based on the product attribute information, wherein the celebrity image recommendation information includes at least one celebrity image; and displaying, by the electronic device, a first screen including the at least one celebrity image and a specified number of

According to various embodiments, the specified number of famous features may respectively correspond to the specified number of weight values.

According to various embodiments, the first screen may include celebrity feature values corresponding to the specified number of celebrity features for each of the at least one famous image.

According to various embodiments, the first screen may further include at least one other celebrity image of each

According to various embodiments, the operating method of the online advertisement content platform providing system may further include an operation of providing an intermediary interface with the first celebrity of the first celebrity when the electronic device selects the first celebrity from among the at least one celebrity image displayed on the first screen.

According to various embodiments, the operating method of the online advertisement content platform providing system may further include an operation of displaying, by the electronic device, an image of a specific product, the selected first celebrity image, and a second screen that together provides an advertisement image produced based on the image of the specific product and the selected first celebrity image when the first celebrity image is selected from among the at least one celebrity image displayed on the first screen.

The electronic devices according to various embodiments disclosed herein may be various types of devices. The electronic device may include, for example, a portable communication device (e.g., a smartphone), a computer device, a portable multimedia device, a portable medical device, a camera, a wearable device, or a home appliance. The electronic device according to the embodiment of the present document is not limited to the above-described devices.

It should be understood that the various embodiments of the present document and the terms used herein are not intended to limit the technical features described in the present document to particular embodiments and include various changes, equivalents, or alternatives to the corresponding embodiment. **In** relation to the description of the drawings, similar reference numerals may be used for similar or related components. The singular form of a noun corresponding to an item may include one or more of the items unless the relevant context clearly indicates otherwise. **In** this document, each of the phrases such as "a or b," "a and b," "a and b," "a and b," "a and c," "a and b," "a and c," and "a and b," "a and c," may include any one of the items listed together in the corresponding phrase among the phrase, or any and all combinations thereof. The terms "first," "second," or "first" or "second" may be used to simply distinguish the corresponding component from other corresponding components, and the corresponding components are not limited in other aspects (e.g., importance or order). When a component (e.g., first) is referred to as "coupled" or "connected" with or without the term "functionally" or "communicatively", it means that the component may be connected to the other component directly (e.g., wiredly), wirelessly, or through a third component.

The term "module" used in various embodiments of the present document may include a unit implemented in hardware, software, or firmware, and may be used interchangeably with terms s such as, for example, logic, logic blocks, components, or circuits. The module may be an integrated component or a a a minimum unit or a part thereof that performs one or more functions. For example, according to an embodiment, the module may be implemented in the form of an application-specific integrated circuit (ASIC).

Various embodiments of the present disclosure may be implemented as software (e.g., a program) including one or more instructions stored in a storage medium (e.g., an internal memory or an external memory) readable by a machine (e.g., an electronic device). For example, a processor (e.g., a processor) of a machine (e.g., an electronic device) may invoke at least one instruction among the one or more instructions stored from the storage medium and execute it. This enables the machine to operate to perform at least one function according to the at least one invoked instruction. The one or more instructions may include code generated by a compiler or code that can be executed by an interpreter. The machine-readable storage medium may be provided in the form of a non-transitory storage medium. Here, the term "non-transitory" means that the storage medium is a tangible device and does not include a signal (e.g., electromagnetic wave), and this term does not distinguish between the case where data is semi-permanently stored in the storage medium and the case where data is temporarily stored.

According to an embodiment, the method according to various embodiments disclosed in the present disclosure may be included and provided in a computer program product. The computer program product may be traded between a seller and a buyer as a product. The computer program product may be distributed in the form of a machine-readable storage medium (e.g., compact disc read only memory (CD-ROM)), or distributed (e.g., downloaded or uploaded) online through an application store (e.g., Play StoreTM), or directly between two user devices (e.g., smartphones). In the case of online distribution, at least a part of the computer program product may be temporarily generated or at least temporarily stored in a machine-readable storage medium such as a server of a manufacturer, a server of an application store, or a memory of a relay server.

According to various embodiments, each component (e.g., module or program) of the above-described components may include a single entity or a plurality of entities, and some of the plurality of entities may be separately disposed in other components. According to various embodiments, one or more components or operations among the above-described corresponding components may be omitted, or one or more other components or operations may be added. Alternatively or additionally, a plurality of components (e.g., modules or programs) may be integrated into one component. In this case, the integrated component may perform one or more functions of each component of the plurality of components in the same or similar manner as performed by the corresponding components among the plurality of components prior to the integration. According to various embodiments, operations performed by a module, a program, or another components may be executed sequentially, parallelly, repeatedly, or heuristically executed, one or omitted in a different order of one or one or more other operations may be added.

[Explanation of Reference Numerals]

    100: System
    101: electronic device
    110: first external electronic device
    120: second external electronic device
    130: server
    233: artificial intelligence model

**Claims**

1.  An online advertisement content platform providing system comprising:

    a server; and
    an electronic device,
    wherein the server configured to:

        obtain at least one content of a specific product from the electronic device, wherein the at least one content includes an image of the specific product;
        obtain a product attribute information of the specific product based on the at least one content, wherein the product attribute information corresponds to a plurality of product features;
        provide celebrity image recommendation information identified based on a plurality of weight values associated with the plurality of product features to the electronic device, based on the product attribute information, wherein the celebrity image recommendation information including at least one celebrity image;
wherein the electronic device configured to:

    display a first screen including the at least one celebrity image and a predetermined number of celebrity features among a plurality of celebrity features, based on the provided celebrity image recommendation information,
    wherein the predetermined number of celebrity features includes a first group of celebrity features among the plurality of celebrity features based on the specific product being a first product,
    wherein the predetermined number of celebrity features includes a second group of celebrity features among the plurality of celebrity features, based on the specific product being a second product,
    wherein the second group of celebrity features is at least partially different from the first group of celebrity features.

2.  The online advertisement content platform providing system according to Claim 1,
wherein the predetermined number of celebrity features respectively corresponds to a predetermined number of weight values.

3.  The online advertisement content platform providing system according to Claim 1,
wherein the first screen includes celebrity feature values corresponding to the predetermined number of celebrity features for each of the at least one celebrity image.

4.  The online advertisement content platform providing system according to Claim 1,
wherein the first screen further includes at least one other celebrity image of a celebrity of each celebrity image included in the celebrity image recommendation information.

5.  The online advertisement content platform providing system according to Claim 1,
wherein the electronic device is further configured to provide a mediation interface with a first celebrity of a first celebrity image, if the first celebrity image among the at least one celebrity image displayed on the first screen is selected.

6.  The online advertisement content platform providing system according to Claim 1,
wherein, if the first celebrity image among the at least one celebrity image displayed on the first screen is selected, the electronic device is further configured to display a second screen providing an image of the specific product, the selected first celebrity image, and an advertisement image generated based on the image of the specific product and the selected first celebrity image.

7. The online advertisement content platform providing system according to Claim 1,
   wherein the server is configured to:

   compare sizes of the plurality of weight values, and
   determine the predetermined number of weight values among the plurality of weight values with larger sizes based on the result of the comparison.

8. The online advertisement content platform providing system according to Claim 1,
   wherein the server is further configured to:

   identify celebrity attribute information of a plurality of celebrity images;
   perform calculations on the plurality of weight values and the identified celebrity attribute information; and
   identify the at least one celebrity image based on the result of the calculations.

9. The online advertisement content platform providing system according to Claim 1,
   wherein the plurality of weight values are:

   identified, based on the specific product being the first product, based on a reference matrix and first product attribute information of the first specific product, and
   identified, based on the specific product being the second product, based on the reference matrix and second product attribute information of the second specific product; and
   wherein the first product attribute information and the second product attribute information are at least partially different.

10. An electronic device comprising:

    a display;
    a memory; and
    at least one processor,
    wherein the at least one processor is configured to:

    obtain at least one content of a specific product, wherein the at least one content including an image of the specific product;

    obtain product attribute information of the specific product based on the at least one content, wherein the product attribute information is based on a plurality of product features;
    obtain a plurality of celebrity features for each of a plurality of celebrity images based on the plurality of celebrity images, wherein the plurality of celebrity features for each celebrity image include first features for a first image of a specific celebrity and second features for a second image of the specific celebrity, and the first features and the second features are at least partially different;
    obtain at least one celebrity image among the plurality of celebrity images and a predetermined celebrity feature among a plurality of features corresponding to the at least one celebrity image, based on the product attribute information;
    obtain celebrity image recommendation information including the at least one celebrity image and the predetermined celebrity feature; and
    display, on the display, a first screen including the at least one celebrity image and the predetermined celebrity feature based on the celebrity image recommendation information.

11. The electronic device according to Claim 10,

    wherein the at least one processor is configured to identified a plurality of weight values corresponding to each of the plurality of product features based on the product attribute information, and
    wherein the at least one celebrity image and the predetermined celebrity features corresponding to the at least one celebrity image are obtained based on the plurality of weight values.

12. The electronic device according to Claim 11,
    wherein the predetermined celebrity features correspond to the predetermined number of weight values among the plurality of weight values.

13. The electronic device according to Claim 10,
    wherein the first screen includes celebrity feature values corresponding to the predetermined celebrity features for each of the at least one celebrity image.

14. The electronic device according to Claim 10,
    wherein the first screen further includes at least one other celebrity image of a celebrity of each celebrity image included in the celebrity image recommendation information.

**15.** The electronic device according to Claim 10, wherein the at least one processor is configured to provide a mediation interface with the first celebrity of a first celebrity image, if the first celebrity image among the at least one celebrity image displayed on the first screen is selected.

**16.** The electronic device according to Claim 10, Wherein, if the first celebrity image among the at least one celebrity image displayed on the first screen is selected, the at least one processor is configured to display a second screen providing an image of the specific product, the selected first celebrity image, and an advertisement image generated based on the image of the specific product and the selected first celebrity image

**17.** The electronic device according to Claim 11, wherein the at least one processor is configured to:

compare sizes of the plurality of weight values, and
determine the predetermined number of weight values among the plurality of weight values with larger sizes based on the result of the comparison.

**18.** The electronic device according to Claim 11, wherein the at least one processor is configured to:

identify celebrity attribute information of a plurality of celebrity images,
perform calculations on the plurality of weight values and the identified celebrity attribute information, and
identify the at least one celebrity image based on the result of the calculations.

**19.** The electronic device according to Claim 11, wherein the plurality of weight values are:

identified, based on the specific product being a first product, based on a reference matrix and first product attribute information of the first specific product, and
identified, based on the specific product being a second product, based on the reference matrix and second product attribute information of the second specific product; and
wherein the first product attribute information and the second product attribute information are at least partially different.

**20.** A method of operating an electronic device, the method comprising:

obtaining at least one content of a specific product, wherein the at least one content including an image of the specific product;
obtaining product attribute information of the specific product based on the at least one content, wherein the product attribute information is corresponding to a plurality of product features;
obtaining a plurality of celebrity features for each of a plurality of celebrity images based on the plurality of celebrity images, wherein the plurality of celebrity features for each celebrity image include first features for a first image of a specific celebrity and second features for a second image of the specific celebrity, and the first features and the second features are at least partially different;
obtaining at least one celebrity image among the plurality of celebrity images and a predetermined celebrity feature among a plurality of features corresponding to the at least one celebrity image, based on the product attribute information;
obtaining celebrity image recommendation information including the at least one celebrity image and the predetermined celebrity features; and
displaying a first screen including the at least one celebrity image and the predetermined celebrity features based on the celebrity image recommendation information.

FIG. 1

<u>100</u>

101

130

110

| Electronic device | ←→ | Server | ←→ | First external electronic device |

Second external electronic device

120

FIG. 2

FIG. 3

**Artificial intelligence model (233)**

301 content

Weight

Convolution layer

Activation function

Activation map

Pooling layer

...

303 output content

EP 4 530 958 A1

FIG. 4

First training
data (401)

Second training
data (402)

Artificial intelligence
model (233)

FIG. 5

First data (401) → Artificial intelligence model (233) → Second data (402)

FIG. 6

```
                    ( Start )
                        │
                        ▼
┌─────────────────────────────────────────────────────────┐
│     Acquire at least one content of a specific product (601) │
└─────────────────────────────────────────────────────────┘
                        │
                        ▼
┌─────────────────────────────────────────────────────────┐
│       Acquire product attribute information (603)          │
└─────────────────────────────────────────────────────────┘
                        │
                        ▼
┌─────────────────────────────────────────────────────────┐
│  Provide celebrity image recommendation information identified │
│ based on weight values associated product attribute information (605) │
└─────────────────────────────────────────────────────────┘
                        │
                        ▼
┌─────────────────────────────────────────────────────────┐
│        Display a screen including celebrity images and       │
│     a predetermined number of celebrity features (607)     │
└─────────────────────────────────────────────────────────┘
                        │
                        ▼
                    ( End )
```

FIG. 7

```
                        ┌─────────┐
                        │  Start  │
                        └─────────┘
                             │
                             ▼
┌─────────────────────────────────────────────────────────────┐
│     Acquire at least one content of a specific product (701) │
└─────────────────────────────────────────────────────────────┘
                             │
                             ▼
┌─────────────────────────────────────────────────────────────┐
│         Acquire product attribute information (703)          │
└─────────────────────────────────────────────────────────────┘
                             │
                             ▼
┌─────────────────────────────────────────────────────────────┐
│              Identify weight values associated with          │
│              product attribute information (705)             │
└─────────────────────────────────────────────────────────────┘
                             │
                             ▼
┌─────────────────────────────────────────────────────────────┐
│      Determine the brand suitability of each celebrity image │
│          based on the identified weight values (707)         │
└─────────────────────────────────────────────────────────────┘
                             │
                             ▼
┌─────────────────────────────────────────────────────────────┐
│  Recommend at least one celebrity image related to a specific│
│    product based on the determined brand suitability (709)   │
└─────────────────────────────────────────────────────────────┘
                             │
                             ▼
                        ┌─────────┐
                        │   End   │
                        └─────────┘
```

FIG. 8

(a)

(b)

(c)

# FIG. 9

FIG. 10

1000

Sign
in

Sign
up

cosmetic

1010

EP 4 530 958 A1

FIG. 11

EP 4 530 958 A1

FIG. 12a

## FIG. 12b

FIG. 13

EP 4 530 958 A1

FIG. 14

1400

◀ Project 2

Pending...

화장품

Creators

1410 — Taejun
A  B  C  ▶

1420 — Alice
C  A  D  ▶

1430 — June
E  A  B  ▶

# FIG. 15

Popularity

Description

Portfolio

OK

• • •

• • •   • • •

• • •

• • •

• • •

FIG. 16

1600

1630

Taejun

A  B  C  ▶

1640

CPM:5 USD

Or you can send a message..

Done!

1610

1620

1650

EP 4 530 958 A1

## FIG. 17

Project 3

Product

Celeb 1

Messenger

Accepted

Pending..

1710 1740 1700 1750 1720 1730 1760 1770

EP 4 530 958 A1

## FIG. 18

EP 4 530 958 A1

## INTERNATIONAL SEARCH REPORT

International application No.

**PCT/KR2023/010045**

### A. CLASSIFICATION OF SUBJECT MATTER

**G06Q 30/02**(2012.01)i; **G06Q 30/06**(2012.01)i; **G06Q 10/06**(2012.01)i

According to International Patent Classification (IPC) or to both national classification and IPC

### B. FIELDS SEARCHED

Minimum documentation searched (classification system followed by classification symbols)

G06Q 30/02(2012.01); G06Q 10/06(2012.01); G06Q 10/10(2012.01); G06Q 30/06(2012.01); G06Q 30/08(2012.01); H04N 21/8358(2011.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 온라인(online), 광고(advertisement), 플랫폼(platform), 추천 (recommendation), 이미지(image), 유명인(celebrity)

### C. DOCUMENTS CONSIDERED TO BE RELEVANT

| Category* | Citation of document, with indication, where appropriate, of the relevant passages | Relevant to claim No. |
|---|---|---|
| Y | KR 10-2021-0058126 A (ILSUNG INTERNATIONAL) 24 May 2021 (2021-05-24)<br>See paragraphs [0032]-[0083] and figure 2. | 1-20 |
| Y | KR 10-2016-0125082 A (STAR COLLABO CO., LTD.) 31 October 2016 (2016-10-31)<br>See paragraphs [0036]-[0041] and figure 2. | 1-20 |
| Y | KR 10-2009-0003783 A (CHOI, Yeong et al.) 12 January 2009 (2009-01-12)<br>See paragraphs [0050]-[0051] and figure 3. | 6,16 |
| Y | KR 10-2017-0126592 A (STAR COLLABO CO., LTD.) 20 November 2017 (2017-11-20)<br>See paragraphs [0073]-[0082] and figure 1. | 8,18 |
| A | KR 10-2022-0053937 A (JUNG, Yoo Seok) 02 May 2022 (2022-05-02)<br>See entire document. | 1-20 |

☑ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **18 October 2023** | **18 October 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

# EP 4 530 958 A1

**INTERNATIONAL SEARCH REPORT**

| International application No. |
| --- |
| **PCT/KR2023/010045** |

**C. DOCUMENTS CONSIDERED TO BE RELEVANT**

| Category* | Citation of document, with indication, where appropriate, of the relevant passages | Relevant to claim No. |
| --- | --- | --- |
| PX | KR 10-2531185 B1 (ALIGO AI INC. et al.) 11 May 2023 (2023-05-11)<br>See entire document.<br>*This document is a published earlier application that serves as a basis for claiming priority of the present international application. | 1-20 |

Form PCT/ISA/210 (second sheet) (July 2022)

40

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| KR | 10-2021-0058126 | A | 24 May 2021 | None | | | |
| KR | 10-2016-0125082 | A | 31 October 2016 | KR | 10-1708405 | B1 | 24 February 2017 |
| KR | 10-2009-0003783 | A | 12 January 2009 | KR | 10-0900922 | B1 | 03 June 2009 |
| KR | 10-2017-0126592 | A | 20 November 2017 | None | | | |
| KR | 10-2022-0053937 | A | 02 May 2022 | KR | 10-2495117 | B1 | 06 February 2023 |
| KR | 10-2531185 | B1 | 11 May 2023 | None | | | |

Form PCT/ISA/210 (patent family annex) (July 2022)